# EUROPEAN PATENT APPLICATION

(11) **EP 4 020 285 A1**
(43) Date of publication of application: **29.06.2022**
(21) Application number: 21194696.7
(22) Date of filing: 03.09.2021
(51) Int. Cl.: G06F 21/57, G06F 21/75, G06F 30/30

(54) **SIMULATION STATE TO DETECT TRANSIENT EXECUTION ATTACK**

(30) Priority: 22.12.2020 US 202017130722
(71) Applicant: INTEL Corporation, Santa Clara, CA 95054 (US)
(72) Inventor: Gopinath, Ashwini, Austin TX, 78749 (US); Brandt, Jason, Austin TX, 78703 (US); Robinson, Stephen, Austin TX, 78749 (US)
(74) Representative: Samson & Partner Patentanwälte mbB

(57) **Abstract**

An embodiment of an apparatus includes memory to store a simulation model, a processor communicatively coupled to the memory, and logic communicatively coupled to the processor and the memory, the logic to run a simulation on the simulation model, identify one or more signals in the simulation model that contains data that should not be visible through any incidental channels, and selectively convert the identified one or more signals to an incidental-data state while the simulation runs. Other embodiments are disclosed and claimed.

## Description

### BACKGROUND

### 1. Technical Field

This disclosure generally relates to processor technology, and simulation technology.

### 2. Background Art

Modern processors execute instructions out of order to improve performance. These out-of-order processors may "speculate" that a branch or a load can use a value before the processor confirms that speculative value is correct, and execution may proceed with that speculative value temporarily. When the branch/load resolves and it is known whether the value speculatively used was correct, there are two possible cases: 1) If the speculatively used value was correct, then instructions that depend on that value are valid and can retire, meaning that their results become architecturally visible to the program; 2) Otherwise, the instructions that depend on that speculative value are invalid and must be squashed, meaning that their results are not committed to the architectural program state. In this context, these instructions may be referred to as transient (meaning impermanent). Following the squash, the processor can resume execution with the correct value.

Although the results of transient instructions are not committed to the architectural program state, a microarchitectural processor state may still be affected by transient instructions. For example, if a transient instruction attempts to load data from an address whose contents are not available in any processor cache, then the corresponding data may be loaded into a processor cache. The state of that cache constitutes an incidental channel. Data can be observed from this channel via analysis techniques such as Flush+Reload or Prime+Probe that measure the latencies of cache accesses. A transient execution attack exploits microarchitectural side effects of transient instructions, thus allowing a malicious adversary to access information that would ordinarily be prohibited by architectural access control mechanisms.

### BRIEF DESCRIPTION OF THE DRAWINGS

The various embodiments of the present invention are illustrated by way of example, and not by way of limitation, in the figures of the accompanying drawings and in which:
FIGs. 1A to 1C are flow diagrams of an example of a method according to an embodiment;
FIG. 2 is a block diagram of an example of an apparatus according to an embodiment;
FIG. 3 is a flow diagram of another example of a method according to an embodiment;
FIG. 4 is a block diagram of an example of a simulation environment according to an embodiment;
FIG. 5A is a block diagram illustrating both an exemplary in-order pipeline and an exemplary register renaming, out-of-order issue/execution pipeline according to embodiments of the invention.
FIG. 5B is a block diagram illustrating both an exemplary embodiment of an in-order architecture core and an exemplary register renaming, out-of-order issue/execution architecture core to be included in a processor according to embodiments of the invention;
FIGs. 6A-B illustrate a block diagram of a more specific exemplary in-order core architecture, which core would be one of several logic blocks (including other cores of the same type and/or different types) in a chip;
FIG. 7 is a block diagram of a processor that may have more than one core, may have an integrated memory controller, and may have integrated graphics according to embodiments of the invention;
FIGs. 8-11 are block diagrams of exemplary computer architectures; and
FIG. 12 is a block diagram contrasting the use of a software instruction converter to convert binary instructions in a source instruction set to binary instructions in a target instruction set according to embodiments of the invention.

### DETAILED DESCRIPTION

Embodiments discussed herein variously provide techniques and mechanisms for simulating a complex logic design. The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including integrated circuitry which is operable to simulate logic designs.

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up ― i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of' or "one or more of' can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Various embodiments described herein may include a memory component and/or an interface to a memory component. Such memory components may include volatile and/or nonvolatile (NV) memory. Volatile memory may be a storage medium that requires power to maintain the state of data stored by the medium. Non-limiting examples of volatile memory may include various types of random access memory (RAM), such as dynamic RAM (DRAM) or static RAM (SRAM). One particular type of DRAM that may be used in a memory module is synchronous dynamic RAM (SDRAM). In particular embodiments, DRAM of a memory component may comply with a standard promulgated by Joint Electron Device Engineering Council (JEDEC), such as JESD79F for double data rate (DDR) SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available atjedec.org). Such standards (and similar standards) may be referred to as DDR-based standards and communication interfaces of the storage devices that implement such standards may be referred to as DDR-based interfaces.

NV memory (NVM) may be a storage medium that does not require power to maintain the state of data stored by the medium. In one embodiment, the memory device may include a block addressable memory device, such as those based on NAND or NOR technologies. A memory device may also include future generation nonvolatile devices, such as a three dimensional (3D) crosspoint memory device, or other byte addressable write-in-place nonvolatile memory devices. In one embodiment, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor RAM (FeTRAM), anti-ferroelectric memory, magnetoresistive RAM (MRAM) memory that incorporates memristor technology, resistive memory including the metal oxide base, the oxygen vacancy base and the conductive bridge RAM (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product. In particular embodiments, a memory component with non-volatile memory may comply with one or more standards promulgated by the JEDEC, such as JESD218, JESD219, JESD220-1, JESD223B, JESD223-1, or other suitable standard (the JEDEC standards cited herein are available atjedec.org).

A channel may refer to any medium in a computing system that may transmit or signal information. In the context of a computing systems, legitimate channels may refer to channels intended by system designers for the transmission of information, and all other channels may be referred to as incidental channels. Examples of legitimate channels include ethernet, shared memory, and IPC sockets. Resource contention, the state of a CPU cache, and variations in power consumption are all examples of incidental channels.

In the context of a security threat model, it is often useful to distinguish between two methods by which a malicious adversary can exploit an incidental channel. An incidental channel is functioning as a covert channel if the adversary controls both the input and output of the incidental channel. An incidental channel is serving as a side channel if the adversary cannot exert control over the input and is only able to read the output. For example, the implementation of a cryptographic algorithm may unintentionally leak sensitive data into a side channel while the adversary is monitoring the side channel's output. Note that legitimate channels and incidental channels are attributes of a computing system, whereas side channels and covert channels are aspects of a threat model that describe how an adversary may use an incidental channel.

To launch a transient execution attack, the adversary attempts to access a victim's secret, transmit that secret over a covert channel, and receive the secret from the covert channel. In this context, the access of the victim's secret and the transmission of that secret over the covert channel may be collectively referred to as the disclosure gadget. Note that the underlying incidental channel is functioning as a covert channel because the adversary controls both its input and its output.

Transient execution attacks may be categorized according to their impact on hardware-based protection features. A hardware protection domain (referred to simply as domain in this context) consists of code and data within a protection boundary that is defined by hardware-enforced access control mechanisms such as privilege level (ring), page tables, or protection keys. Examples of domains include processes, INTEL SOFTWARE GUARD EXTENSIONS (INTEL SGX) enclaves, virtual machines (VMs), and ring 0 operating system (OS) code. Domains can also be distinct machines or devices connected over a network, bus, or other hardware interface, where the content of network/bus traffic constitutes the legitimate channel, and other measurable attributes of the transmission (latency, for instance) may create incidental channels.

A transient execution attack may be characterized by the relationship between the disclosure gadget and the victim/adversary domains. For example, a transient execution attack may be referred to as domain-bypass if the disclosure gadget is in the adversary's domain. A transient execution attack may be referred to as cross-domain if the disclosure gadget is in the victim's domain. A transient execution attack may be referred to as in-domain if the disclosure gadget is in an adversary-controlled sandbox within the victim's domain.

Transient execution attacks (e.g., sometimes also referred to as speculative execution side channels) such as SPECTRE and MELTDOWN can be difficult to find with traditional methodologies. There may be subtle ways that behavior of a less privileged mode controls the transient behavior of a more privileged mode (e.g., SPECTRE-like) or subtle ways that transient behavior of a less privileged mode can reveal privileged information that the less privileged software should not be allowed to read (e.g., MELTDOWN-like, or other domain-bypass transient execution attacks). Specific checkers may be created based on a specific case (e.g. faulting data should not update the branch predictors), but this approach is not scalable, requires a validator to identify all the cases to check, and is vulnerable to mistakes in the checker that cause it to not to detect the issue. Formal checkers are difficult to set up, may require new tools to be developed, require highly specialized expertise, and often do not scale to complex chips.

Some embodiments provide simulation technology to test processors to discover and mitigate transient execution attacks. In particular, some embodiments provide technology to find transient execution attacks using a simulation state (e.g., a new incidental-data state (nominally 'Z'), or a don't-care state ('X')). During simulation, some embodiments convert signals to the incidental-data state (e.g., Z or X) when the signals contain data that should not be visible to a transient execution attack. Some embodiments may then determine if the incidental-data state (Z/X) spreads throughout the core/block/chip and, if so, provide tools for the validator to investigate to determine if the spread of the Z/X's indicates a transient execution attack.

Many simulation tools support data states that include a logical-zero state ('0'), a logical-one state ('1'), and a don't-care state (X). Some embodiments of a simulator provide a fourth data state for the incidental-data state (Z). Alternatively, if a simulation tool doesn't support the new Z state, some embodiments may utilize the don't-care state to effectively represent incidental data and identify transient execution attacks where an injected X state spreads through incidental channels. Advantageously, some embodiments may be applied to complex logic designs to find potential issues with much less manual effort (e.g., as compared to utilizing specific checkers or formal checkers).

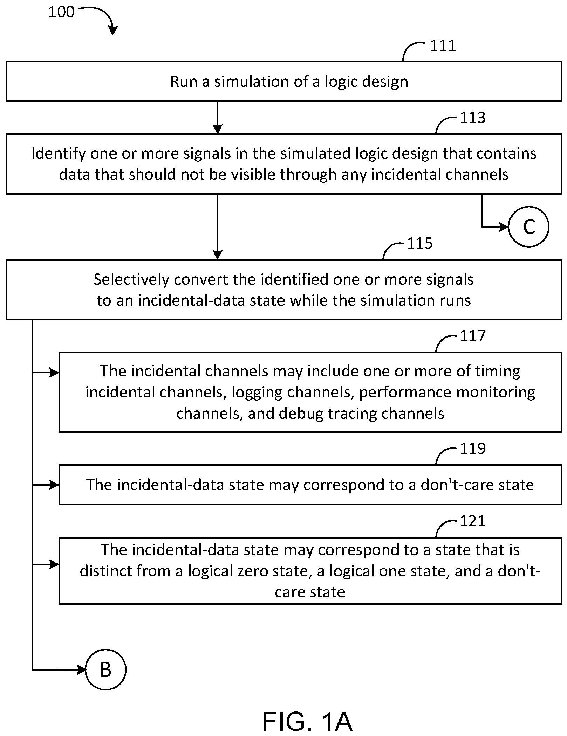

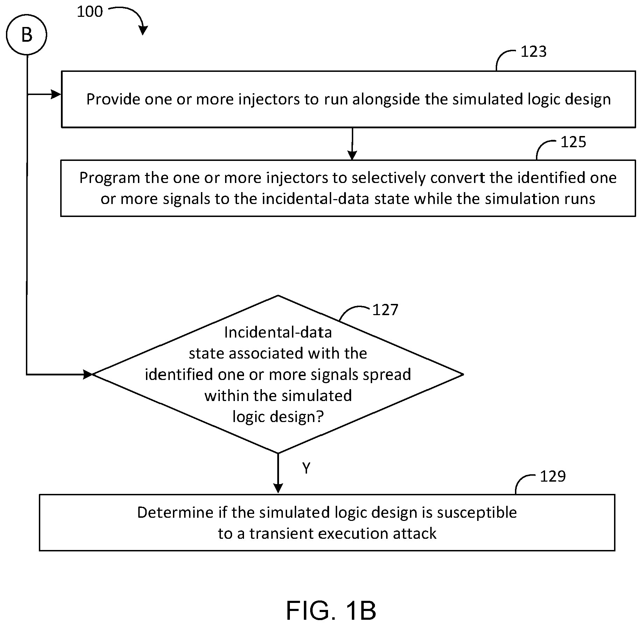

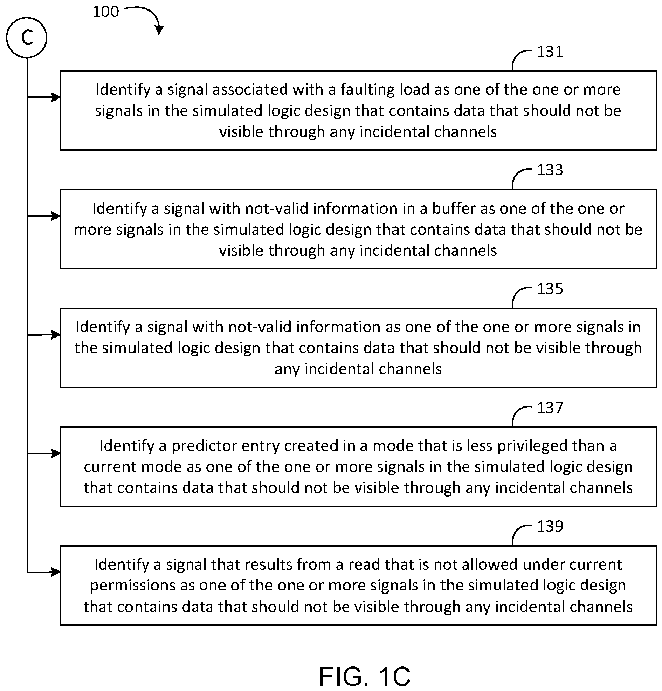

With reference to FIGs. 1A to 1C, an embodiment of a method 100 may include running a simulation of a logic design at box 111, identifying one or more signals in the simulated logic design that contains data that should not be visible through any incidental channels at box 113, and selectively converting the identified one or more signals to an incidental-data state while the simulation runs at box 115. For example, the incidental channels may include one or more of timing incidental channels, logging channels, performance monitoring channels, and debug tracing channels at box 117. For example, a timing incidental channel includes both a covert channel and a side channel. Those skilled in the art will appreciate that subtle changes in timing may be indicative of a timing incidental channel. Non-limiting examples of a timing incidental channel include a later load executing one cycle later if the data that should not be visible is odd than if that data was even, a particular entry appearing in a branch predictor, a particular entry appearing in a level one (L1) cache, a particular least recently used (LRU) entry being marked as used, etc.

In some embodiments, the incidental-data state may correspond to a don't-care state at box 119. Alternatively, the incidental-data state may correspond a state that is distinct from a logical-zero state, a logical-one state, and a don't-care state at box 121. Some embodiments of the method 100 may further include providing one or more injectors to run alongside the simulated logic design at box 123, and programming the one or more injectors to selectively convert the identified one or more signals to the incidental-data state while the simulation runs at box 125. The method 100 may also include determining if the incidental-data state associated with the identified one or more signals has spread within the simulated logic design at box 127, and then determining if the simulated logic design is susceptible to a transient execution attack at box 129 if the incidental-data state is determined to have spread within the simulated logic design at box 127.

Some embodiments of the method 100 may further include identifying a signal associated with a faulting load as one of the one or more signals in the simulated logic design that contains data that should not be visible through any incidental channels at box 131, identifying a signal with not-valid information in a buffer as one of the one or more signals in the simulated logic design that contains data that should not be visible through any incidental channels at box 133, and/or identifying a signal with not-valid information as one of the one or more signals in the simulated logic design that contains data that should not be visible through any incidental channels at box 135. For example, a signal associated with a faulting load may include data returned by a faulting load (e.g. to dependent operations), and/or data returned to a faulting load (e.g., data returned by a memory cluster to the faulting load micro-operation's destination). The method 100 may also include identifying a predictor entry created in a mode that is less privileged than a current mode (e.g., ring 3 versus ring 0) as one of the one or more signals in the simulated logic design that contains data that should not be visible through any incidental channels at box 137, and/or identifying a signal that results from a read that is not allowed under current permissions as one of the one or more signals in the simulated logic design that contains data that should not be visible through any incidental channels at box 139.

Embodiments of the method 100 may be implemented in a system, apparatus, computer, device, etc., for example, such as those described herein. More particularly, hardware implementations of the method 100 may include configurable logic such as, for example, programmable logic arrays (PLAs), field programmable gate arrays (FPGAs), complex programmable logic devices (CPLDs), or fixed-functionality logic hardware using circuit technology such as, for example, application specific integrated circuit (ASIC), complementary metal oxide semiconductor (CMOS) or transistor-transistor logic (TTL) technology, or any combination thereof. Hybrid hardware implementations include static dynamic System-on-Chip (SoC) re-configurable devices such that control flow, and data paths implement logic for the functionality.

Alternatively, or additionally, the method 100 may be implemented in one or more modules as a set of logic instructions stored in a machine- or computer-readable storage medium such as RAM, ROM, PROM, firmware, flash memory, etc., to be executed by a processor or computing device. For example, computer program code to carry out the operations of the components may be written in any combination of one or more OS applicable/appropriate programming languages, including an object-oriented programming language such as PYTHON, PERL, JAVA, SMALLTALK, C++, C#, VHDL, Verilog, System C or the like and conventional procedural programming languages, such as the "C" programming language or similar programming languages.

For example, the method 100 may be implemented on a computer readable medium. Embodiments or portions of the method 100 may be implemented in firmware, applications (e.g., through an application programming interface (API)), or driver software running on an operating system (OS). Additionally, logic instructions might include assembler instructions, instruction set architecture (ISA) instructions, data set architecture (DSA) commands, (machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, Moore Machine, Mealy Machine, etc.).

An embodiment of a machine readable medium (e.g., which may include one or more non-transitory machine readable media) may include a plurality of instructions that, in response to being executed on a computing device, cause the computing device to run a simulation of a logic design, identify one or more signals in the simulated logic design that contains data that should not be visible through any incidental channels, and selectively convert the identified one or more signals to an incidental-data state while the simulation runs. For example, the incidental channels include one or more of timing incidental channels, logging channels, performance monitoring channels, and debug tracing channels. In some embodiments of the machine readable medium, the incidental-data state may correspond to a don't-care state. Alternatively, the incidental-data state may correspond to a state that is distinct from a logical-zero state, a logical-one state, and a don't-care state.

Some embodiments of the machine readable medium may include a plurality of further instructions that, in response to being executed on the computing device, cause the computing device to provide one or more injectors to run alongside the simulated logic design, and program the one or more injectors to selectively convert the identified one or more signals to the incidental-data state while the simulation runs. Embodiments of the machine readable medium may also include a plurality of further instructions that, in response to being executed on the computing device, cause the computing device to determine if the incidental-data state associated with the identified one or more signals has spread within the simulated logic design, and to determine if the simulated logic design is susceptible to a transient execution attack if the incidental-data state is determined to have spread within the simulated logic design.

Some embodiments of the machine readable medium may include a plurality of further instructions that, in response to being executed on the computing device, cause the computing device to identify a signal where data returned to a faulting load as one of the one or more signals in the simulated logic design that contains data that should not be visible through any incidental channels, to identify a signal with not-valid information in a buffer as one of the one or more signals in the simulated logic design that contains data that should not be visible through any incidental channels, and/or to identify a signal with not-valid information as one of the one or more signals in the simulated logic design that contains data that should not be visible through any incidental channels. Embodiments of the machine readable medium may also include a plurality of further instructions that, in response to being executed on the computing device, cause the computing device to identify a predictor entry created in a mode that is less privileged than a current mode as one of the one or more signals in the simulated logic design that contains data that should not be visible through any incidental channels, and/or to identify a signal that results from a read that is not allowed under current permissions as one of the one or more signals in the simulated logic design that contains data that should not be visible through any incidental channels.

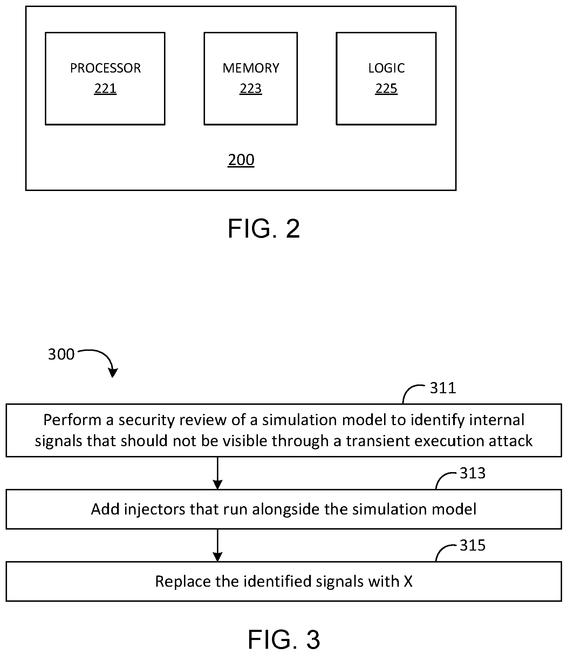

With reference to FIG. 2, an embodiment of an apparatus 200 may include memory 223 to store a simulation model, a processor 221 communicatively coupled to the memory 223, and logic 225 communicatively coupled to the processor 221 and the memory 223. The logic 225 may be configured to run a simulation on the simulation model, identify one or more signals in the simulation model that contains data that should not be visible through any incidental channels, and selectively convert the identified one or more signals to an incidental-data state while the simulation runs. For example, the incidental channels may include one or more of timing incidental channels, logging channels, performance monitoring channels, and debug tracing channels. In some embodiments, the incidental-data state may correspond to a don't-care state. Alternatively, the incidental-data state may correspond to a state that is distinct from a logical-zero state, a logical-one state, and a don't-care state.

In some embodiments, the logic 225 may be further configured to provide one or more injectors to run alongside the simulation model, and program the one or more injectors to selectively convert the identified one or more signals to the incidental-data state while the simulation runs. The logic 225 may also be configured to determine if the incidental-data state associated with the identified one or more signals has spread within the simulation model, and to determine if the simulated logic design is susceptible to a transient execution attack if the incidental-data state is determined to have spread within the simulation model.

In some embodiments, the logic 225 may be further configured to identify a signal where data returned to a faulting load as one of the one or more signals in the simulation model that contains data that should not be visible through any incidental channels, to identify a signal with not-valid information in a buffer as one of the one or more signals in the simulation model that contains data that should not be visible through any incidental channels, and/or to identify a signal with not-valid information as one of the one or more signals in the simulation model that contains data that should not be visible through any incidental channels. The logic 225 may also be configured to identify a predictor entry created in a mode that is less privileged than a current mode as one of the one or more signals in the simulation model that contains data that should not be visible through any incidental channels, and/or to identify a signal that results from a read that is not allowed under current permissions as one of the one or more signals in the simulation model that contains data that should not be visible through any incidental channels.

Embodiments of the logic 225 may be implemented in a system, apparatus, computer, device, etc., for example, such as those described herein. More particularly, hardware implementations of the logic 225 may include configurable logic such as, for example, PLAs, FPGAs, CPLDs, or in fixed-functionality logic hardware using circuit technology such as, for example, ASIC, CMOS, or TTL technology, or any combination thereof. Alternatively, or additionally, the logic 225 may be implemented in one or more modules as a set of logic instructions stored in a machine- or computer-readable storage medium such as RAM, ROM, PROM, firmware, flash memory, etc., to be executed by a processor or computing device. For example, computer program code to carry out the operations of the components may be written in any combination of one or more OS applicable/appropriate programming languages, including an object-oriented programming language such as PYTHON, PERL, JAVA, SMALLTALK, C++, C#, VHDL, Verilog, System C or the like and conventional procedural programming languages, such as the "C" programming language or similar programming languages. Embodiments of the processor 221 may include a general purpose processor, a special purpose processor, a central processor unit (CPU), an execution unit, a controller, a micro-controller, etc. In some embodiments, all or portions of the memory 223, the logic 225, and/or other system memory may be located in, or co-located with, various components, including the processor 221 (e.g., on a same die, in a same package, in a same enclosure, etc.).

For example, the logic 225 may be implemented as circuitry on a semiconductor apparatus, which may include one or more substrates, with the circuitry coupled to the one or more substrates. In some embodiments, the circuitry may be at least partly implemented in one or more of configurable logic and fixed-functionality hardware logic on semiconductor substrate(s) (e.g., silicon, sapphire, gallium-arsenide, etc.). For example, the circuitry may include a transistor array and/or other integrated circuit components coupled to the substrate(s) with transistor channel regions that are positioned within the substrate(s). The interface between the circuitry and the substrate(s) may not be an abrupt junction. The circuitry may also be considered to include an epitaxial layer that is grown on an initial wafer of the substrate(s).

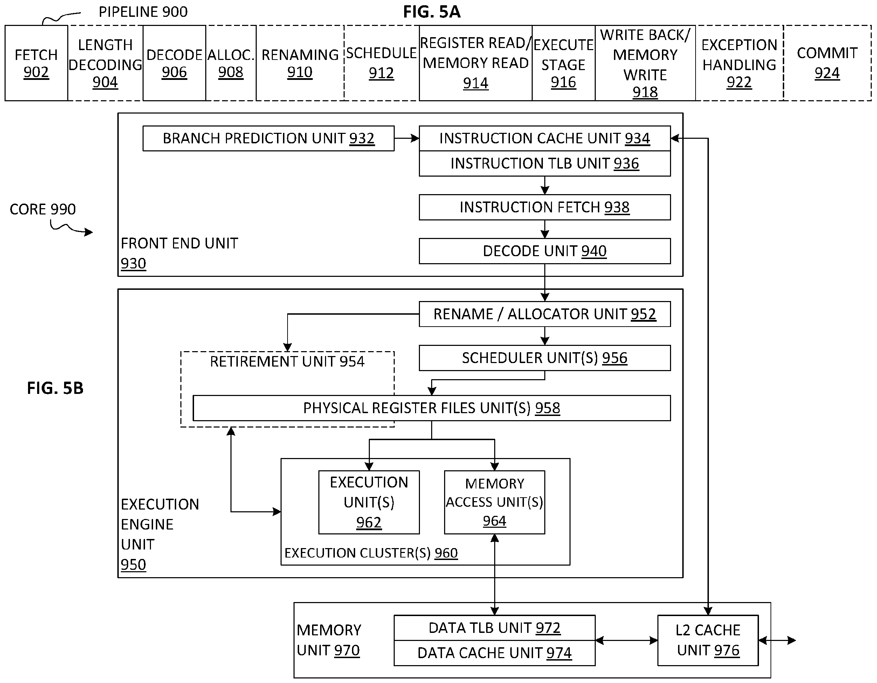

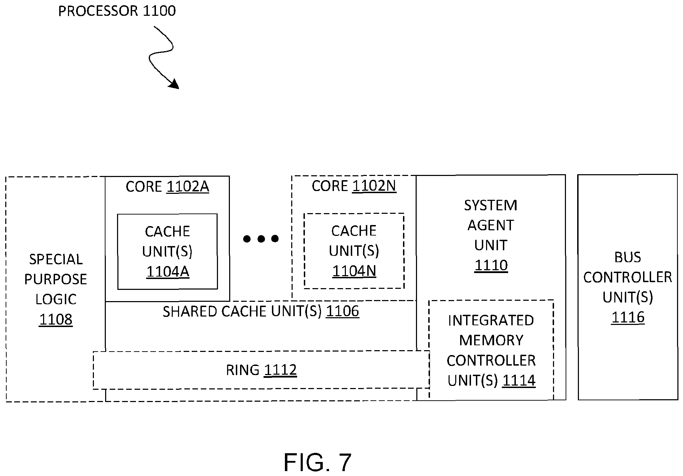

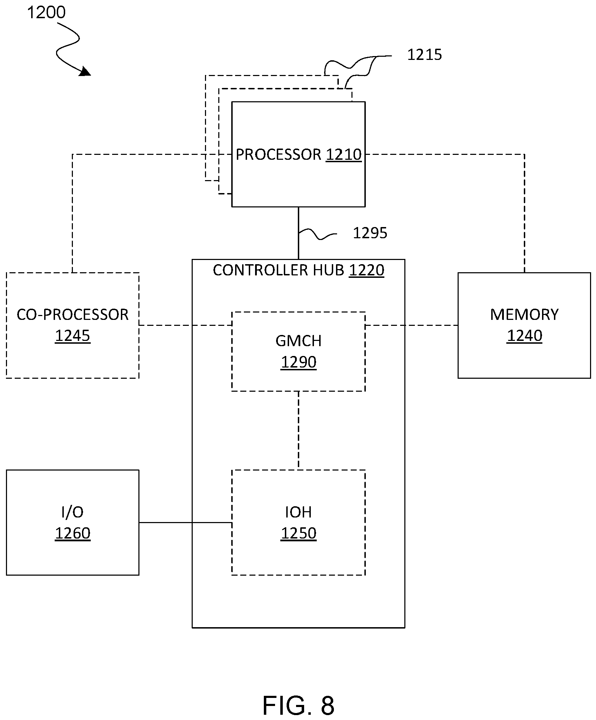

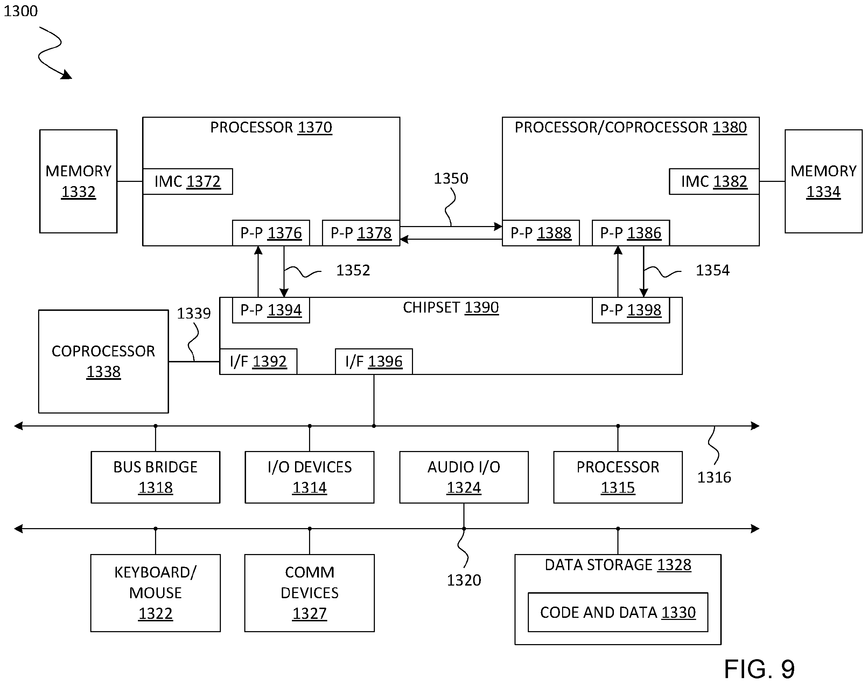

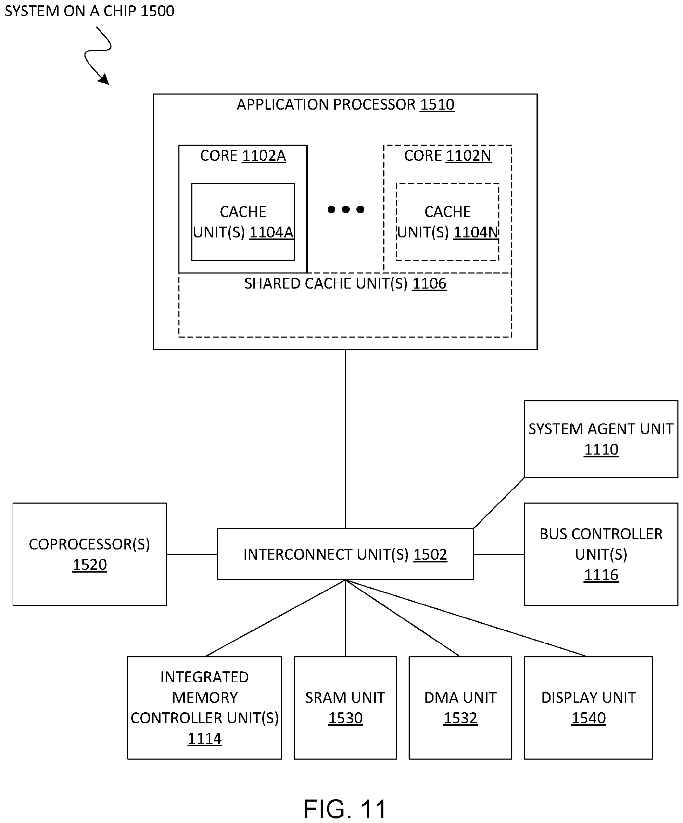

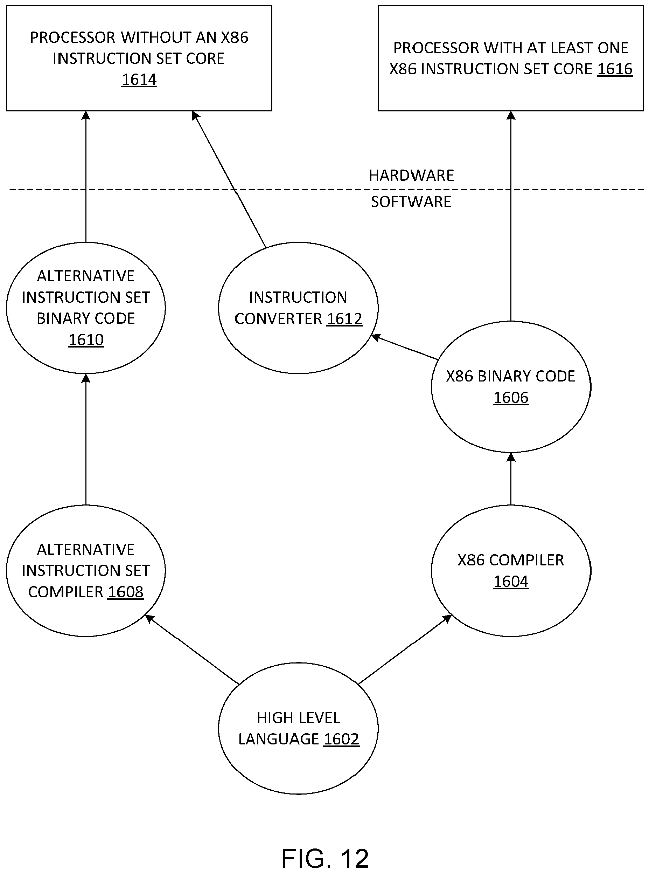

Embodiments of the processor 221 may include, for example, the core 990 (FIG. 5B), the cores 1102A-N (FIGs. 7, 11), the processor 1210 (FIG. 8), the co-processor 1245 (FIG. 8), the processor 1370 (FIGs. 9-10), the processor/coprocessor 1380 (FIGs. 9-10), the coprocessor 1338 (FIGs. 9-10), the coprocessor 1520 (FIG. 11), and/or the processors 1614, 1616 (FIG. 12).

In order to properly model the unknown state that occurs at boot, many register transfer level (RTL) simulators commonly support not just the states 0 and 1, but also the X state (commonly referred to as the don't-care state). The X state could be either a 0 or 1 and rules are applied for how the X state combines with other values. When the processor first powers on during simulation, most elements are in the X state. The processor model generally includes logic or mechanisms to move the system to defined 0's and 1's states (e.g., to remove the X's). In some embodiments, accordingly, the X state may be repurposed as the incidental-data state.

With reference to FIG. 3, an embodiment of a method 300 may include first performing a security review of a simulation model to identify internal signals that should not be visible through a transient execution attack at box 311. One example of such signals includes the data returned to a faulting load (e.g., related to MELTDOWN/L1TF attacks). Another example of such signals includes not valid bytes in a buffer or in signals (e.g., related to MDS attacks). Another example of such signals includes predictor entries created in a less privileged mode (e.g., related to SPECTRE variant 2 attacks). Other examples of such signals will occur to those skilled in the art. The method 300 may then include adding injectors (e.g., tools that inject data) that run alongside the simulation model at box 313, and replacing the identified signals with X at box 315. For example, the injectors may be implemented as instrumentation built into the simulation model. Additionally, or alternatively, the injectors may be implemented as part of a simulation control process or file to convert the identified signals at a certain time of the simulation or after some event.

If mitigations of the simulation model are effective, then the X's will not spread while the simulation continues to run, indicating that the simulation model has the exact same timing behavior regardless of the value. In other words, the original signal value should have been a don't-care and converting the signal to the don't-care state validates that in fact the signal remains a don't-care without spreading. Even very subtle flaws in the mitigations of the simulation model may lead to the X's spreading throughout the simulation model. Because simulation models generally contain many checkers that will fail the test when X's spread (e.g., if what operation is scheduled is X or if the X's spread to valid data on the bus), the spreading of X's is quickly detected by such checkers. The simulation results can then be manually examined to discover how the X's spread out and the hardware behavior can be changed to avoid the failure (e.g., if the behavior is a concern) or the checker can be changed to avoid failing in this case (e.g., if the behavior is not a problem).

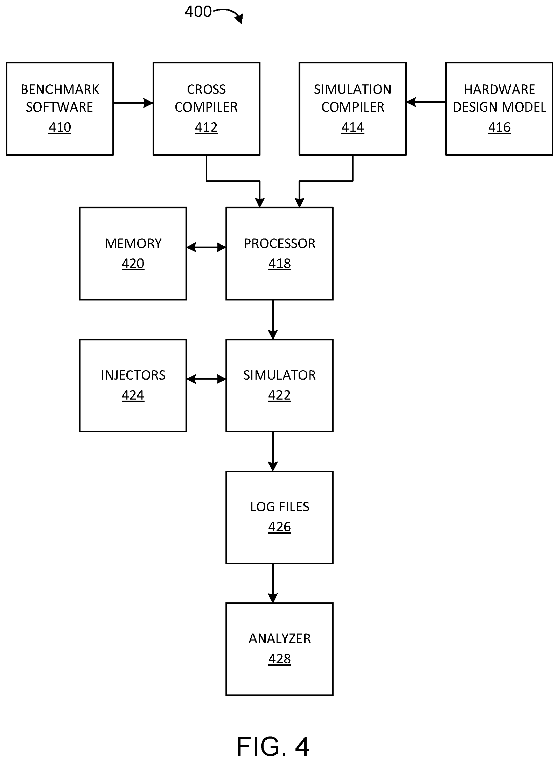

With reference to FIG. 4, an embodiment of a simulation environment 400 may include benchmark software 410 compiled by cross compiler 412, and a hardware design model 416 compiled by a simulation compiler 414. Outputs of the compilers 412, 414 are provided to a processor 418 coupled to a memory 420 in order to execute a simulator 422 on the hardware design model 416 being simulated. For example, the hardware design model 416 may utilize a hardware design language (HDL) to implement register transfer level (RTL) simulation and analysis. Injectors 424 may inject incidental-data states into the RTL logic to result in one or more log files 426 for the simulation. The log files 426 may be processed by an analyzer 428 for evaluation of the simulation.

In some embodiments, the simulator 422 may convert a signal to the incidental-data state when the simulator 422 determines that the signal contains data that should not be visible through any incidental channel. For example, incidental channels include timing incidental channels such as all side channels and covert channels. The incidental channels also include event logging, such as performance monitoring events or debug tracing. Such incidental data may also be covered through reading the incidental channel and then branching off the data read. Accordingly, some types of logging channels may also be timing incidental channels. In some embodiments, the simulator 422 may utilize the don't-care state for the incidental-data state.

The simulator 422 may identify domain-bypass transient execution attacks, where the conversion of a signal is because the signal is the result of a read that is not allowed for the current permissions. The simulator 422 may also convert a signal because the signal was affected by less privileged software that may be an adversary (e.g., a branch predictor entry that was filled by an application could be injected with incidental-data states on switching to a secure mode and restored to its previous value from the incidental-data states when returning to the less privileged and possibly malicious application). The simulator 422 may also convert a signal because the signal should not be used because the processor 418 is not ensuring that there is not sensitive data in it. For example, the simulator 422 may convert all not-valid registers (e.g., where no rename allocation table (RAT) entry points to the registers) to the incidental-data state to ensure that the registers do not create an incidental channel (e.g., the not-valid register may not often contain secrets, but sometimes they might).

Embodiments of the processor 418 may include, for example, the core 990 (FIG. 5B), the cores 1102A-N (FIGs. 7, 11), the processor 1210 (FIG. 8), the co-processor 1245 (FIG. 8), the processor 1370 (FIGs. 9-10), the processor/coprocessor 1380 (FIGs. 9-10), the coprocessor 1338 (FIGs. 9-10), the coprocessor 1520 (FIG. 11), and/or the processors 1614, 1616 (FIG. 12).

Many hardware design models 416 include numerous (e.g., hundreds of) assertions around the model to test various things. For example, a MUX may not have multiple options selected at the same time (e.g., the inputs are one hot) and may report an exception if such a situation occurs. A wide variety of illegal or unexpected cases are detected in the logic design and/or simulation model. In general, the illegal/unexpected cases will fail if the simulation encounters a data state other than a 0 or a 1 (e.g., a X or a Z). Additionally, the simulation model may be constructed such that the inputs and outputs of the model include an assertion added to make sure that all valid transactions and bytes are not X or Z. When the simulation fails due to the assert seeing an unacceptable X or Z, then the validator may analyze the failure and walk back the incidental-data states to find the source.

Some assertions may be modified to allow the incidental-data state if the validator concludes that those signals being in the incidental-data state is acceptable. For example, maybe it is acceptable for registers in the register file to be marked incidental-data state if they are not valid (e.g., no renamed register points to them) if the logic design provides confidence that no read ever occurs to the not valid registers, even transiently from a register entry that is not currently valid (e.g., does not have a RAT entry pointing to the register). In this case, the assertion around the register file may need to be changed to allow the incidental-data state in registers so long as they are not valid.

Although the foregoing examples focus on transient execution attacks, embodiments may also be useful for detecting incidental channels for other usages where sensitive data may be exposed. Cryptography usages, for example, may detect decryption and/or encryption instructions that have different performance based on the data values being processed. For example, if a decryption instruction exhibits different latency for even and odd values, then that decryption instruction may be more vulnerable as a crypto key because the different latency may reveal the least significant bit of the key. Given the benefit of the present application, other usages will occur to those skilled in the art.

Those skilled in the art will appreciate that a wide variety of devices may benefit from the foregoing embodiments. The following exemplary core architectures, processors, and computer architectures are non-limiting examples of devices that may beneficially incorporate embodiments of the technology described herein.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

FIG. 5A is a block diagram illustrating both an exemplary in-order pipeline and an exemplary register renaming, out-of-order issue/execution pipeline according to embodiments of the invention. FIG. 5B is a block diagram illustrating both an exemplary embodiment of an in-order architecture core and an exemplary register renaming, out-of-order issue/execution architecture core to be included in a processor according to embodiments of the invention. The solid lined boxes in FIGs. 5A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 5A, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

FIG. 5B shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964. The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster ― and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 perform the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

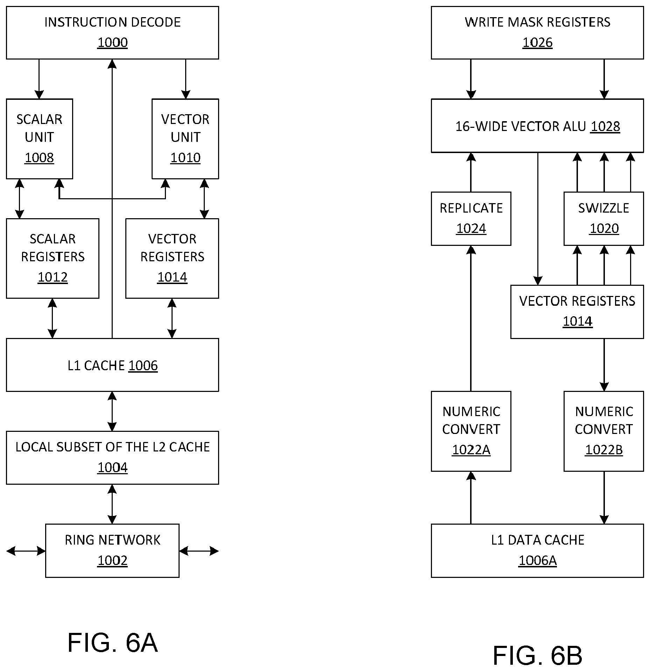

FIGs. 6A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 6A is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from a level 1 (L1) cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

FIG. 6B is an expanded view of part of the processor core in FIG. 6A according to embodiments of the invention. FIG. 6B includes an L1 data cache 1006A part of the L1 cache 1006, as well as more detail regarding the vector unit 1010 and the vector registers 1014. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

FIG. 7 is a block diagram of a processor 1100 that may have more than one core, may have an integrated memory controller, and may have integrated graphics according to embodiments of the invention. The solid lined boxes in FIG. 7 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) 1114 in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of respective caches 1104A-N within the cores 1102A-N, a set or one or more shared cache units 1106, and external memory (not shown) coupled to the set of integrated memory controller units 1114. The set of shared cache units 1106 may include one or more mid-level caches, such as level 2 (L2), level 3 (L3), level 4 (L4), or other levels of cache, a last level cache (LLC), and/or combinations thereof. While in one embodiment a ring based interconnect unit 1112 interconnects the integrated graphics logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102-A-N.

In some embodiments, one or more of the cores 1102A-N are capable of multithreading. The system agent 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set.

### Exemplary Computer Architectures

FIGs. 8-11 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 8, shown is a block diagram of a system 1200 in accordance with one embodiment of the present invention. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in FIG. 8 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

Referring now to FIG. 9, shown is a block diagram of a first more specific exemplary system 1300 in accordance with an embodiment of the present invention. As shown in FIG. 9, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a point-to-point (P-P) interface 1350 using P-P interface circuits 1378, 1388. As shown in FIG. 9, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339 and an interface 1392. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via **P-P** interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation **I/O** interconnect bus, although the scope of the present invention is not so limited.

As shown in FIG. 9, various **I/O** devices 1314 may be coupled to first bus 1316, along with a bus bridge 1318 which couples first bus 1316 to a second bus 1320. In one embodiment, one or more additional processor(s) 1315, such as coprocessors, high-throughput MIC processors, GPGPU's, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of FIG. 9, a system may implement a multi-drop bus or other such architecture.

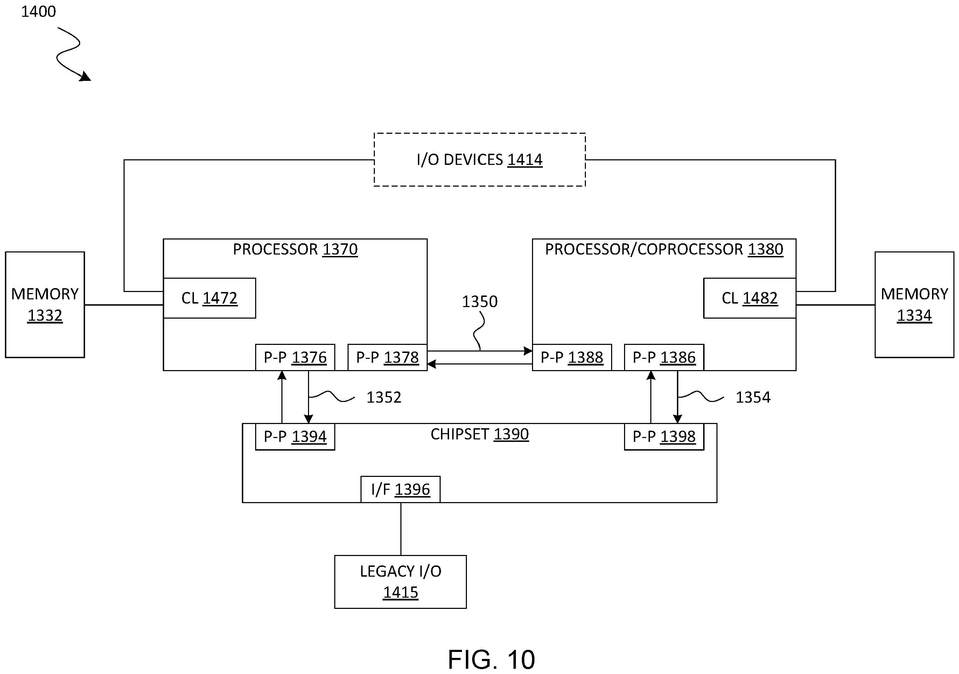

Referring now to FIG. 10, shown is a block diagram of a second more specific exemplary system 1400 in accordance with an embodiment of the present invention. Like elements in FIGs. 9 and 10 bear like reference numerals, and certain aspects of FIG. 9 have been omitted from FIG. 10 in order to avoid obscuring other aspects of FIG. 10.

FIG. 10 illustrates that the processors 1370, 1380 may include integrated memory and I/O control logic ("CL") 1472 and 1482, respectively. Thus, the CL 1472, 1482 include integrated memory controller units and include I/O control logic. FIG. 10 illustrates that not only are the memories 1332, 1334 coupled to the CL 1472, 1482, but also that I/O devices 1414 are also coupled to the control logic 1472, 1482. Legacy I/O devices 1415 are coupled to the chipset 1390.

Referring now to FIG. 11, shown is a block diagram of a SoC 1500 in accordance with an embodiment of the present invention. Similar elements in FIG. 7 bear like reference numerals. Also, dashed lined boxes are optional features on more advanced SoCs. In FIG. 11, an interconnect unit(s) 1502 is coupled to: an application processor 1510 which includes a set of one or more cores 1102A-N and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1330 illustrated in FIG. 9, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 12 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 12 shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, FIG. 12 shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

Techniques and architectures for simulation with an incidental-data state are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A method, comprising:
running a simulation of a logic design;
identifying one or more signals in the simulated logic design that contains data that should not be visible through any incidental channels; and
selectively converting the identified one or more signals to an incidental-data state while the simulation runs.

2. The method of claim 1, wherein the incidental channels include one or more of timing incidental channels, logging channels, performance monitoring channels, and debug tracing channels.

3. The method of any of claims 1 to 2, wherein the incidental-data state corresponds to a don't-care state.

4. The method of any of claims 1 to 2, wherein the incidental-data state corresponds to a state that is distinct from a logical-zero state, a logical-one state, and a don't-care state.

5. The method of any of claims 1 to 4, further comprising:
providing one or more injectors to run alongside the simulated logic design; and
programming the one or more injectors to selectively convert the identified one or more signals to the incidental-data state while the simulation runs.

6. At least one non-transitory machine readable medium comprising a plurality of instructions that, in response to being executed on a computing device, cause the computing device to:
run a simulation of a logic design;
identify one or more signals in the simulated logic design that contains data that should not be visible through any incidental channels; and
selectively convert the identified one or more signals to an incidental-data state while the simulation runs.

7. The at least one non-transitory machine readable medium of claim 6, wherein the incidental channels include one or more of timing incidental channels, logging channels, performance monitoring channels, and debug tracing channels.

8. The at least one non-transitory machine readable medium of any of claims 6 to 7, comprising a plurality of further instructions that, in response to being executed on the computing device, cause the computing device to:
provide one or more injectors to run alongside the simulated logic design; and
program the one or more injectors to selectively convert the identified one or more signals to the incidental-data state while the simulation runs.

9. The at least one non-transitory machine readable medium of any of claims 6 to 8, comprising a plurality of further instructions that, in response to being executed on the computing device, cause the computing device to:
determine if the incidental-data state associated with the identified one or more signals has spread within the simulated logic design.

10. The at least one non-transitory machine readable medium of claim 9, comprising a plurality of further instructions that, in response to being executed on the computing device, cause the computing device to:
determine if the simulated logic design is susceptible to a transient execution attack if the incidental-data state is determined to have spread within the simulated logic design.

11. An apparatus, comprising:
memory to store a simulation model;
a processor communicatively coupled to the memory; and
logic communicatively coupled to the processor and the memory, the logic to:
run a simulation on the simulation model,
identify one or more signals in the simulation model that contains data that should not be visible through any incidental channels, and
selectively convert the identified one or more signals to an incidental-data state while the simulation runs.

12. The apparatus of claim 11, wherein the incidental channels include one or more of timing incidental channels, logging channels, performance monitoring channels, and debug tracing channels.

13. The apparatus of any of claims 11 to 12, wherein the logic is further to:
provide one or more injectors to run alongside the simulation model; and
program the one or more injectors to selectively convert the identified one or more signals to the incidental-data state while the simulation runs.

14. The apparatus of any of claims 11 to 13, wherein the logic is further to:
determine if the incidental-data state associated with the identified one or more signals has spread within the simulation model.

15. The apparatus of claim 14, wherein the logic is further to:
determine if the simulated logic design is susceptible to a transient execution attack if the incidental-data state is determined to have spread within the simulation model.
